# EUROPÄISCHE PATENTANMELDUNG

(11) **EP 2 615 511 A1**
(43) Veröffentlichungstag der Anmeldung: **17.07.2013**
(21) Anmeldenummer: 12150977.2
(22) Anmeldetag: 12.01.2012
(51) Int. Cl.: G05B 19/042, G05B 19/418

(54) **Verfahren zur synchronen Ausführung von Programmen in einem redundanten Automatisierungssystem**

(71) Anmelder: Siemens Aktiengesellschaft, 80333 München (DE)
(72) Erfinder: Harms, Fritz, 75031 Eppingen (DE); Veith, Christian, 76316 Malsch (DE)

(57) **Zusammenfassung**

Die Erfindung betrifft ein Verfahren zur synchronen Ausführung von Programmen (P3, P4) in einem redundanten, aus mindestens zwei Teilsystemen (A, B, C) bestehenden Automatisierungssystem (AS), wobei aufgrund mindestens einer Anforderung zur Ausführung eines der Programme (P3, P4) ein Scheduling-Durchlauf gestartet und während dieses Scheduling-Durchlaufs entschieden wird, ob dieses eine Programm (P3, P4) auf jedem der Teilsysteme (A, B, C) zur Ausführung kommt. Es werden geeignete Maßnahmen vorgeschlagen, mittels deren allen Programmen (P3, P4) gemäß ihren Prioritäten ein fairer und deterministischer Anteil an der Programmausführung ermöglicht wird.

## Beschreibung

Die Erfindung betrifft ein Verfahren zur synchronen Ausführung von Programmen in einem redundanten, aus mindestens zwei Teilsystemen bestehenden Automatisierungssystem, wobei aufgrund mindestens einer Anforderung zur Ausführung eines der Programme ein Scheduling-Durchlauf gestartet und während dieses Scheduling-Durchlaufs entschieden wird, ob dieses eine Programm auf jedem der Teilsysteme zur Ausführung kommt. Darüber hinaus betrifft die Erfindung ein redundantes, aus mindestens zwei Teilsystemen bestehendes Automatisierungssystem, welches zur Durchführung des Verfahrens geeignet ist.

Aus dem Siemens-Katalog ST 70, Kapitel 6, Ausgabe 2011 ist ein redundantes, aus zwei Teilsystemen bestehendes Automatisierungssystem bekannt, welches zur synchronen Ausführung von Programmen ausgebildet ist. Dazu ist das Automatisierungssystem mit Mitteln versehen, welche aufgrund eines Ereignisses zunächst entscheiden, welches Programm gestartet werden muss, um geeignet auf das Ereignis zu reagieren. Für den Fall, dass beispielsweise während der Ausführung eines Programms ein Ereignis in Form eines anstehenden Alarms eines zu steuernden technischen Prozesses an einem Meldeeingang des Automatisierungssystems anliegt, wird gewöhnlich das laufende Programm an einem Wartepunkt angehalten und ein Programm gestartet, das zur Analyse des Alarms und zum Einleiten von Maßnahmen vorgesehen ist, welche die Ursache des Alarms beheben. Darüber hinaus ist eine synchrone Ausführung dieses Programms erforderlich, um die Anforderungen an ein redundantes bzw. hochverfügbares Automatisierungssystem erfüllen zu können.

Ein derartiges "ereignissynchrones" Automatisierungssystem, welches zwei oder mehrere Teilsysteme umfasst, muss regelmäßig synchronisiert werden, was bedeutet, dass diese Teilsysteme rechtzeitig zu synchronisieren sind. Dadurch ist sichergestellt, dass der Ausfall eines dieser Teilsysteme sich nicht störend auf einen zu steuernden Prozess auswirkt, weil die anderen Teilsysteme die Ausführung bzw. die Bearbeitung des entsprechenden Teils ihres jeweiligen Steuerprogramms oder die Ausführung bzw. die Bearbeitung der entsprechenden Teile dieses Steuerprogramms fortsetzen können. Im Folgenden wird unter einem Programm sowohl ein Programm als solches als auch ein Unterprogramm, ein Teil eines Programms, eine Task, ein Thread, ein Organisationsbaustein, ein Funktionsbaustein oder ein sonstiger geeigneter Programmcode zur Verwirklichung einer Automatisierungsfunktion verstanden, wobei die Programme eines Automatisierungssystems gewöhnlich in Prioritätsklassen eingeteilt sind und gemäß ihrer zugeordneten Priorität bearbeitet bzw. ausgeführt werden. Für den Fall, dass z. B. ein auf einem ersten Teilsystem aufgetretenes Ereignis nicht mit einem zweiten Teilsystem eines zwei Teilsysteme umfassenden Automatisierungssystems synchronisiert wird und nach der Bearbeitung des Ereignisses durch das erste Teilsystem dieses Teilsystem ausfällt, kann der Verlauf eines zu steuernden technischen Prozesses gestört werden; denn das zweite Teilsystem durchläuft - ohne Kenntnis des Ereignisses - einen anderen die Ausführungs-Reihenfolge der Programme repräsentierenden Programmpfad als den, welchen das zweite Teilsystem in Kenntnis des Ereignisses durchlaufen würde und der auch erforderlich wäre, um den genannten Verlauf des zu steuernden technischen Prozesses nicht zu stören.

Auch für den Fall, dass z. B. ein auf einem der Teilsysteme auftretendes Ereignis nur lokal auf diesem einen Teilsystem zu bearbeiten ist, müssen die anderen Teilsysteme im Hinblick auf die Ausführung bzw. Bearbeitung von Programmen synchronisiert werden. Beispielsweise kann es vorkommen, dass auf einem ersten Teilsystem aufgrund eines an dem ersten Teilsystem aufgetretenen Ereignisses zunächst ein Programm zum Betreiben und/oder Ansteuern einer Schnittstelle dieses ersten Teilsystems ausgeführt werden muss, ehe auf allen Teilsystemen ein weiteres Programm synchron ausgeführt werden kann. Eine Bearbeitung weiterer Programme auf den anderen Teilsystemen während der Bearbeitung des Programms zum Betreiben oder Ansteuern der Schnittstelle auf dem ersten Teilsystem könnte zu Störungen bezüglich des Verlaufs des zu steuernden technischen Prozesses führen, würde also die Ereignissynchronisation verletzen und muss daher unterbleiben.

Die Programme eines Automatisierungssystems sind - wie ausgeführt - in Prioritätsklassen eingeteilt und werden gemäß ihrer zugeordneten Priorität bearbeitet bzw. ausgeführt. Dabei muss ein Wechsel in der Bearbeitung bzw. Ausführung eines Programms auf allen Teilsystemen des Automatisierungssystems synchronisiert und ferner entschieden werden, welches das nächste zu bearbeitende bzw. auszuführende Programm sein wird, was im Folgenden als Scheduling bezeichnet wird, wobei dieses Scheduling während eines Scheduling-Durchlaufs erfolgt. Für den Fall, dass z. B. während der Ausführung eines ersten Programms auf einem ersten Teilsystem ein Ereignis auftritt, welches die Ausführung eines höherprioren zweiten Programms anfordert, wird gewöhnlich das Ereignis synchronisiert, das erste Programm auf allen Teilsystemen an einem Programm-Haltepunkt unterbrochen und auf allen Teilsystemen das höherpriore zweite Programm ausgeführt. Liegt allerdings, beispielsweise wegen einer temporären Störung, eine Vielzahl von hochprioren Ereignissen vor, welche ständig die Ausführung des höherprioren zweiten Programms erfordern würden, so ist es im Sinne eines reibungslosen Gesamtablaufs erforderlich, dass in regelmäßigen Abständen auch das niederpriore erste Programm ausgeführt wird; denn es könnte z. B. vorkommen, dass sonst Peripheriegeräte, die an Schnittstellen des ersten Teilsystems oder an Schnittstellen mehrerer Teilsysteme angeschlossen sind, nicht mehr angesprochen werden können oder dass Verbindungen zu Kommunikationspartnern ausfallen. Dies bedeutet, dass in diesem Fall die "Fairness" des Schedulings verletzt und darüber hinaus, falls das niederpriore erste Programm nur in unregelmäßigen Abständen ausgeführt würde, die Deterministik des Schedulings verletzt werden würde.

Der Erfindung liegt daher die Aufgabe zugrunde, ein Verfahren der eingangs genannten Art anzugeben, welches allen Programmen gemäß ihren Prioritäten einen fairen und deterministischen Anteil an der Programmausführung ermöglicht. Darüber hinaus ist ein Automatisierungssystem zu schaffen, welches zur Durchführung des Verfahrens geeignet ist.

Diese Aufgabe wird im Hinblick auf das Verfahren durch die im kennzeichnenden Teil des Anspruchs 1, bezüglich des Automatisierungssystems durch die im kennzeichnenden Teil des Anspruchs 4 angegebenen Maßnahmen gelöst.

Vorteilhaft ist, dass ein zeitbasiertes deterministisches Scheduling der ereignissynchronen Anteile des Automatisierungssystems - also der Programme des Automatisierungssystems, deren Ausführung bzw. Bearbeitung synchronisiert werden muss - ermöglicht wird, wobei es nicht erforderlich ist, die Zeiten zwischen den Teilsystemen des Automatisierungssystems zu synchronisieren. Auch für den Fall, dass die Teilsysteme unterschiedliche Zeitbasen und/oder unterschiedliche Laufzeiten aufweisen, ist eine synchrone Ausführung der Programme gewährleistet. Dazu wird auf allen Teilsystemen geprüft, ob auf einem der Teilsysteme das Limit - also die für jedes Programm maximal vorgesehene Laufzeit - überschritten wurde, das anzeigt, wie lange das jeweilige Programm auf dem jeweiligen Teilsystem maximal zur Ausführung kommen darf. Somit wird sichergestellt, dass trotz der Laufzeitunterschiede ereignissynchrone Anteile entweder auf allen Teilsystemen zur Ausführung kommen oder aber so lange verzögert werden, bis auf allen Teilsystemen wieder Laufzeitkontingente verfügbar sind.

Vorteilhafte Ausgestaltungen der Erfindung ergeben sich aus den Unteransprüchen.

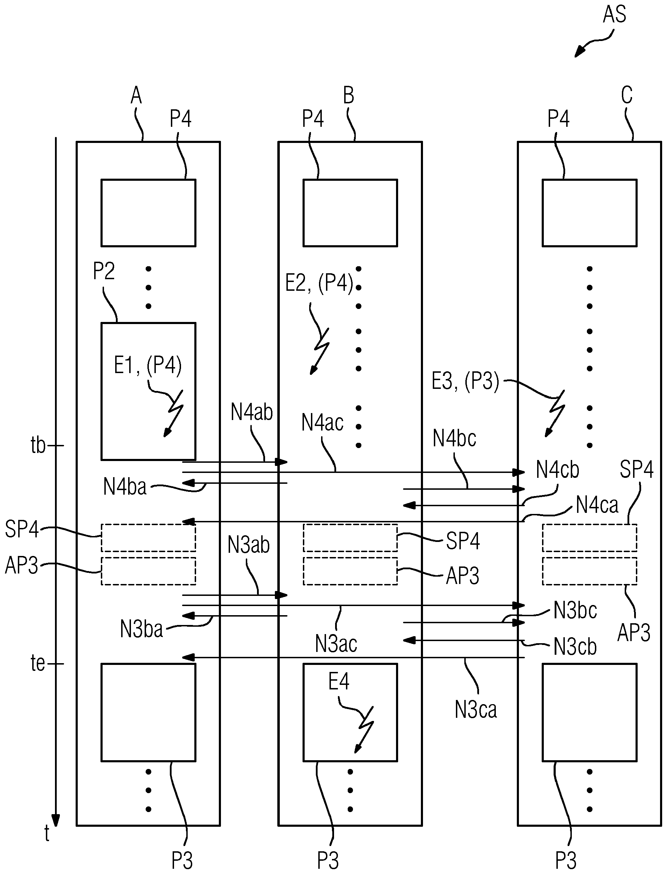

Die Erfindung wird nachfolgend anhand eines Ausführungsbeispiels unter Bezugnahme auf die einzige Figur der Zeichnung näher erläutert. Die Figur der Zeichnung zeigt eine graphische Veranschaulichung einer Synchronisation von Programmen.

Mit AS ist ein redundantes Automatisierungssystem bezeichnet, welches zur Steuerung eines technischen Prozesses vorgesehen ist und drei über eine hier nicht dargestellte Redundanzkopplung verbundene Teilsysteme A, B, C aufweist. Selbstverständlich kann das Automatisierungssystem AS mit weiteren Teilsystemen versehen sein, um die Verfügbarkeit des Automatisierungssystems zu verbessern. Die Teilsysteme A, B, C umfassen gewöhnlich eine CPU-Einheit, mehrere Analog- und/oder Digitalein/-ausgabeeinheiten, Kommunikationseinheiten sowie weitere für den Betrieb des Automatisierungssystems AS und zur Steuerung des Prozesses geeignete Einheiten. Jedes dieser Teilsysteme A, B, C ist über einen Bus mit weiteren Hardwarekomponenten einer so genannten Feldebene verbunden, z. B. Hardwarekomponenten in Form von dezentralen Peripheriesystemen und/oder Feldgeräten, wobei selbstverständlich diese Hardwarekomponenten auch redundant ausgeführt sein können. Ferner sind die Teilsysteme A, B, C über einen weiteren Bus mit einer so genannten Betriebsführungsebene verbunden. Auf den Teilsystemen A, B, C werden identische Steuer- bzw. Anwenderprogramme zur Steuerung des technischen Prozesses ausgeführt, welche häufig eine Vielzahl von Software-Funktionsbausteinen, z. B. Funktionsbausteine in Form von Regler- oder sonstigen Runtime-Bausteinen, umfassen. Für den Fall, dass z. B. das Teilsystem A als Master-System fungiert und dieses ausfällt, was die anderen als Slave-Systeme betriebenen Teilsysteme B, C über die Redundanzkopplung erkennen, übernimmt eines der anderen Teilsysteme B, C die Master-Funktion zur Steuerung des technischen Prozesses. Dabei muss sichergestellt sein, dass auf allen betriebsbereiten Teilsystemen A, B, C die Programme synchron ausgeführt werden, um zu gewährleisten, dass im Falle einer Störung bzw. eines Ausfalls eines der Teilsysteme A, B, C ein anderes der Teilsysteme A, B, C unverzüglich als Master-Einheit fungieren kann.

Jedes der Teilsysteme A, B, C ist dazu ausgebildet, für jedes Programm die bereits aufgelaufene lokale Laufzeit zu erfassen, welche anzeigt, wie lange das jeweilige Programm auf dem jeweiligen Teilsystem A, B, C bereits ausgeführt wurde. Ferner ist jedes der Teilsysteme A, B, C dazu ausgebildet, die jeweiligen Laufzeiten der Programme zurückzusetzen, falls keine weiteren Anforderungen zur Ausführung der Programme vorliegen.

Im Folgenden wird die Synchronisation der Ausführung bzw. der Bearbeitung von Programmen näher erläutert, welche auf den Teilsystemen A, B, C zur Ausführung kommen bzw. dort bearbeitet werden.

Dazu wird angenommen, dass ein Programm P2 zum Betreiben und/oder Ansteuern einer Schnittstelle vorgesehen ist und nur lokal auf dem Teilsystem A ausgeführt wird. Ferner wird angenommen, dass Programme P3 und P4 auf allen Teilsystemen A, B, C synchron auszuführen bzw. zu bearbeiten sind, wobei das Programm P4 höher priorisiert ist als das Programm P3. Darüber hinaus wird angenommen, dass nach einer synchronen Ausführung des Programms P4 auf den Teilsystemen A, B, C aufgrund von Ereignissen E1, E2, E3 das Programm P3 und wiederum das Programm P4 zur Ausführung angefordert werden, wobei die Ereignisse E1 und E2 das Programm P4 und das Ereignis E3 das Programm P3 anfordern - was in der Figur durch Ergänzungen (P3), (P4) an den Bezugszeichen E1, E2, E3 angedeutet ist - und wobei ferner das Ereignis E1 während der Ausführung des Programms P2 auf dem Teilsystem A und die Ereignisse E2 und E3 während eines Ruhe- bzw. Wartezustandes in den Teilsystemen B, C auftreten.

Während dieses Ruhe- bzw. Wartezustandes warten die Teilsysteme B und C auf den Beginn eines Scheduling-Durchlaufs, welcher an einem Haltepunkt des aktuell ausgeführten Programms P2 beginnt und an einem Startpunkt endet, ab welchem ein weiteres Programm - im vorliegenden Beispiel das Programm P3 - auf allen Teilsystemen A, B, C synchron gestartet wird und zur Ausführung kommt. Selbstverständlich kann dieser Haltepunkt auch das Programm-Ende des aktuell ausgeführten Programms P2 sein.

Im vorliegenden Ausführungsbeispiel beginnt ein Scheduling-Durchlauf zu einem Zeitpunkt tb und endet zu einem Zeitpunkt te, ab welchem auf allen Teilsystemen A, B, C das Programm P3 synchron gestartet und ausgeführt wird. Aufgrund dessen, dass das Programm P4 höher priorisiert ist als das Programm P3, tauschen ab dem Zeitpunkt tb die Teilsysteme A, B, C zunächst über die Redundanzkopplung Informationen aus, welche die jeweils aufgelaufene lokale Laufzeit des angeforderten Programms P4 auf dem jeweiligen Teilsystem A, B, C umfassen. Dies bedeutet, dass das Teilsystem A die Teilsysteme B, C über die bereits aufgelaufene Laufzeit des Programms P4 auf dem Teilsystem A informiert bzw. die Teilsysteme B, C darüber informiert, wie lange auf dem Teilsystem A das Programm P4 bereits ausgeführt bzw. bearbeitet wurde. Entsprechende Informationen übermittelt das Teilsystem B den Teilsystemen A, C und das Teilsystem C den Teilsystemen A, B.

Dazu übermittelt das Teilsystem A dem Teilsystem B eine Nachricht N4ab und dem Teilsystem C eine Nachricht N4ac, welche den Teilsystemen B, C die bereits aufgelaufene Laufzeit des Programms P4 auf dem Teilsystem A anzeigen. Das Teilsystem B übermittelt entsprechend dem Teilsystem A eine Nachricht N4ba und dem Teilsystem C eine Nachricht N4bc, die den Teilsystemen A, C die bereits aufgelaufene Laufzeit des Programms P4 auf dem Teilsystem B anzeigen. Ferner führt das Teilsystem C dem Teilsystem A eine Nachricht N4ca und dem Teilsystem B eine Nachricht N4cb zu, welche den Teilsystemen B, C die bereits aufgelaufene Laufzeit des Programms P4 auf dem Teilsystem B anzeigen.

Für den Fall, dass die Teilsysteme A, B, C erkennen, dass auf einem dieser Teilsysteme A, B, C die jeweilige aufgelaufene lokale Laufzeit des Programms P4 eine vorgesehene maximale Laufzeit überschritten hat, was das jeweilige Teilsystem A, B, C durch eine Auswertung der Nachrichten N4ab, N4ac, N4ba, N4bc, N4ca, N4cb und der in den Teilsystemen A, B, C hinterlegten vorgebbaren bzw. vorgegebenen maximalen Laufzeit für das Programm P4 feststellt, suspendiert jedes der Teilsysteme A, B, C in einem Schritt das Programm P4, was bedeutet, dass dieses Programm P4 nicht zur Ausführung kommt, obwohl das Programm P4 - wie angenommen - höher priorisiert ist als das Programm P3.

Für den Fall, dass die Teilsysteme A, B, C allerdings erkennen, dass auf keinem dieser Teilsysteme A, B, C die jeweilige aufgelaufene lokale Laufzeit des Programms P4 eine vorgesehene maximale Laufzeit überschritten hat, starten die Teilsysteme A, B, C synchron das Programm P4.

Im vorliegenden Ausführungsbeispiel wird davon ausgegangen, dass das Programm P4 seine maximal vorgegebene Laufzeit überschritten hat, daher in einem Schritt SP4 suspendiert wird und deshalb nicht zur Ausführung kommen kann. Der Scheduling-Durchlauf wird auf jedem der Teilsysteme A, B, C fortgesetzt und in einem folgenden Schritt AP3 die Bearbeitung der Anforderung des Programms P3 gestartet, die aufgrund des Ereignisses E3 zu bewerkstelligen ist. In der beschriebenen Art und Weise informieren sich die Teilsysteme A, B, C wiederum gegenseitig über die jeweilige aufgelaufene lokale Laufzeit des Programms P3 auf den jeweiligen Teilsystemen A, B, C und übermitteln dazu Nachrichten N3ab, N3ac, N3ba, N3bc, N3ca, N3cb.

Für den Fall, dass - wie im Folgenden angenommen wird - die Teilsysteme A, B, C mittels der Nachrichten N3ab, N3ac, N3ba, N3bc, N3ca, N3cb und der in diesen Teilsystemen A, B, C hinterlegten maximalen Laufzeiten erkennen, dass auf keinem der Teilsysteme A, B, C die jeweilige aufgelaufene lokale Laufzeit des Programms P3 eine vorgesehene maximale Laufzeit für dieses Programm P3 überschritten hat, starten die Teilsysteme A, B, C synchron das Programm P3 zum Zeitpunkt te, womit der Scheduling-Durchlauf abgeschlossen ist.

Es kann nun vorkommen, dass während der Ausführung des Programms P3 oder für eine vorgegebene Zeitspanne nach dessen Ausführung - das bedeutet für eine vorgegebene Zeitspanne nach dem Scheduling-Durchlauf - kein weiteres Ereignis auftritt, welches z. B. eines der Programme P3, P4 oder ein weiteres Programm zur Ausführung auffordert. In diesem Fall heben die Teilsysteme A, B, C die Suspendierung des Programms P4 auf, setzen die jeweils aufgelaufenen Laufzeiten der Programme P2, P3, P4 auf einen Anfangswert zurück und bearbeiten in der beschriebenen Art und Weise in einem weiteren Scheduling-Durchlauf die noch zu bearbeitende Anforderung des Programms P4, die aufgrund der Ereignisse E1, E2 zu bewerkstelligen ist. Nach diesem weiteren Scheduling-Durchlauf wird das Programm P4 synchron auf allen Teilsystemen A, B, C gestartet bzw. dieses Programm P4 wird auf allen Teilsystemen synchron ausgeführt.

Falls allerdings während der Ausführung des Programms P3 oder für die vorgegebene Zeitspanne nach dessen Ausführung - also für eine vorgegebene Zeitspanne nach dem Scheduling-Durchlauf - ein weiteres Ereignis, z. B. ein Ereignis E4, auftritt, welches eines der Programme P3, P4 oder ein weiteres Programm zur Ausführung auffordert, werden einerseits die aufgelaufenen lokalen Laufzeiten der Programme P2, P3, P4 auf den Teilsystemen A, B, C nicht zurückgesetzt und andererseits die Suspendierung des Programms P4 nicht aufgehoben. In der beschriebenen Art und Weise wird im Rahmen des folgenden Scheduling-Durchlaufs in Abhängigkeit der aufgelaufenen Laufzeiten der Programme P2, P3 und des weiteren Programms und der vorgesehenen maximalen Laufzeiten dieser Programme die Entscheidung getroffen, ob dieses weitere Programm oder eines der Programme P2, P3 zur Ausführung kommen wird. Das Programm P4 kann nach diesem folgenden Scheduling-Durchlauf nicht zur Ausführung kommen, da dieses nach wie vor suspendiert ist.

## Patentansprüche

1. Verfahren zur synchronen Ausführung von Programmen (P3, P4) in einem redundanten, aus mindestens zwei Teilsystemen (A, B, C) bestehenden Automatisierungssystem (AS), wobei aufgrund mindestens einer Anforderung zur Ausführung eines der Programme (P3, P4) ein Scheduling-Durchlauf gestartet und während dieses Scheduling-Durchlaufs entschieden wird, ob dieses eine Programm (P3, P4) auf jedem der Teilsysteme (A, B, C) synchron zur Ausführung kommt, **gekennzeichnet durch** folgende Schritte:
- auf jedem Teilsystem (A, B, C) wird für jedes der Programme (P3, P4) die bereits aufgelaufene lokale Laufzeit erfasst, welche anzeigt, wie lange das jeweilige Programm (P3, P4) auf dem jeweiligen Teilsystem (A, B, C) bereits ausgeführt wurde, und
- während des Scheduling-Durchlaufs wird die Entscheidung in Abhängigkeit der jeweiligen erfassten aufgelaufenen lokalen Laufzeit und einer jeweiligen vorgebbaren oder vorgegebenen maximalen Laufzeit des angeforderten einen Programms (P3, P4) getroffen, wobei das angeforderte Programm (P3, P4) auf den Teilsystemen (A, B, C) nicht zur Ausführung kommt, falls eine der aufgelaufenen lokalen Laufzeiten die jeweilige maximale Laufzeit erreicht oder überschreitet.

2. Verfahren nach Anspruch 1, **gekennzeichnet durch** die weiteren Schritte:
a. während des Scheduling-Durchlaufs tauschen die Teilsysteme (A, B, C) Informationen aus, welche die jeweils aufgelaufene lokale Laufzeit des angeforderten einen Programms (P3, P4) auf dem jeweiligen Teilsystem (A, B, C) umfassen,
b. für den Fall, dass in einem der Teilsysteme (A, B, C) die aufgelaufene lokale Laufzeit des angeforderten einen Programms (P3, P4) die jeweilig vorgesehene maximale Laufzeit des angeforderten einen Programms (P3, P4) überschritten hat, wird auf jedem Teilsystem (A, B, C) dieses angeforderte eine Programm (P3, P4) suspendiert, wobei
- für den Fall, dass für eine vorgegebene Zeitspanne nach dem Scheduling-Durchlauf keine weitere Programm-Anforderung vorliegt, die aufgelaufenen lokalen Laufzeiten in jedem Teilsystem (A, B, C) zurückgesetzt werden, die Suspendierung des angeforderten einen Programms (P3, P4) in jedem Teilsystem (A, B, C) wieder aufgehoben wird und die Schritte a. und b. für die Anforderung dieses einen Programms (P3, P4) während eines weiteren Scheduling-Durchlaufs wiederholt werden,
- für den Fall, dass für eine vorgegebene Zeitspanne nach dem Scheduling-Durchlauf eine weitere Anforderung zur Ausführung eines weiteren Programms (P3, P4) vorliegt, die Schritte a. und b. für die Anforderung des weiteren Programms (P3, P4) während eines weiteren Scheduling-Durchlaufs wiederholt werden.

3. Verfahren nach Anspruch 2, **dadurch gekennzeichnet, dass** für den Fall, dass eine Anforderung an einem der Teilsysteme (A, B, C) vorliegt, mittels dieses Teilsystems (A, B, C) dem anderen Teilsystem (A, B, C) eine Nachricht übermittelt wird, welche dem anderen Teilsystem (A, B, C) die aufgelaufene lokale Laufzeit des angeforderten einen Programms (P3, P4) auf dem einen Teilsystem (A, B, C) anzeigt, und diesem einen Teilsystem (A, B, C) die bereits aufgelaufene lokale Laufzeit des angeforderten einen Programms (P3, P4) des anderen Teilsystems (A, B, C) von diesem anderen Teilsystem (A, B, C) übermittelt wird.

4. Aus mindestens zwei Teilsystemen (A, B, C) bestehendes Automatisierungssystem (AS), welches zur synchronen Ausführung von Programmen (P3, P4) ausgebildet ist, wobei ein Scheduler aufgrund mindestens einer Anforderung zur Ausführung eines der Programme (P3, P4) einen Scheduling-Durchlauf startet und während dieses Scheduling-Durchlaufs entscheidet, ob dieses eine Programm (P3, P4) auf jedem der Teilsysteme (A, B, C) zur Ausführung kommt, **dadurch gekennzeichnet, dass** das Automatisierungssystem (AS) dazu ausgebildet ist,
- auf jedem der Teilsysteme (A, B, C) für jedes der Programme (P3, P4) die bereits aufgelaufene lokale Laufzeit zu erfassen, welche anzeigt, wie lange das jeweilige Programm (P3, P4) auf dem jeweiligen Teilsystem (A, B, C) bereits ausgeführt wurde, und
- während des Scheduling-Durchlaufs die Entscheidung in Abhängigkeit der jeweiligen erfassten aufgelaufenen lokalen Laufzeit und einer jeweiligen vorgebbaren oder vorgegebenen maximalen Laufzeit des angeforderten einen Programms (P3, P4) zu treffen, wobei auf den Teilsystemen (A, B, C) das angeforderte eine Programm (P3, P4) nicht zur Ausführung kommt, falls eine der aufgelaufenen lokalen Laufzeiten die jeweilige maximale Laufzeit erreicht oder überschreitet.

5. Automatisierungssystem nach Anspruch 4, **dadurch gekennzeichnet, dass** das Automatisierungssystem (AS) dazu ausgebildet ist, folgende Schritte zu verwirklichen:
a. während des Scheduling-Durchlaufs tauschen die Teilsysteme (A, B, C) Informationen aus, welche die jeweils aufgelaufene lokale Laufzeit des angeforderten einen Programms (P3, P4) auf dem jeweiligen Teilsystem (A, B, C) umfassen,
b. für den Fall, dass in einem der Teilsysteme (A, B, C) die aufgelaufene lokale Laufzeit des angeforderten einen Programms (P3, P4) die jeweilig vorgesehene maximale Laufzeit des angeforderten einen Programms (P3, P4) überschritten hat, wird auf jedem Teilsystem (A, B, C) dieses angeforderte eine Programm (P3, P4) suspendiert, wobei
- für den Fall, dass für eine vorgegebene Zeitspanne nach dem Scheduling-Durchlauf keine weitere Programm-Anforderung vorliegt, die aufgelaufenen lokalen Laufzeiten in jedem Teilsystem (A, B, C) zurückgesetzt werden, die Suspendierung des angeforderten einen Programms (P3, P4) in jedem Teilsystem (A, B, C) wieder aufgehoben wird und die Schritte a. und b. für die Anforderung dieses einen Programms (P3, P4) während eines weiteren Scheduling-Durchlaufs wiederholt werden,
- für den Fall, dass für eine vorgegebene Zeitspanne nach dem Scheduling-Durchlauf eine weitere Anforderung zur Ausführung eines weiteren Programms (P3, P4) vorliegt, die Schritte a. und b. für die Anforderung des weiteren Programms (P3, P4) während eines weiteren Scheduling-Durchlaufs wiederholt werden.

6. Automatisierungssystem nach Anspruch 5, **dadurch gekennzeichnet, dass** das Automatisierungssystem (AS) ferner dazu ausgebildet ist, für den Fall, dass eine Anforderung an einem der Teilsysteme (A, B, C) vorliegt, dass dieses Teilsystem (A, B, C) dem anderen Teilsystem (A, B, C) eine Nachricht übermittelt, welche dem anderen Teilsystem (A, B, C) die aufgelaufene lokale Laufzeit des angeforderten einen Programms (P3, P4) auf dem einen Teilsystem (A, B, C) anzeigt, und dass das andere Teilsystem (A, B, C) diesem einen Teilsystem (A, B, C) die bereits aufgelaufene lokale Laufzeit des angeforderten einen Programms (P3, P4) des anderen Teilsystems (A, B, C) übermittelt.
